# EUROPEAN PATENT SPECIFICATION

(11) **EP 3 637 550 B1**
(45) Date of publication and mention of the grant of the patent: **29.04.2026**
(21) Application number: 18813797.0
(22) Date of filing: 31.05.2018
(51) Int. Cl.: H01R 4/62, H01R 43/02, H01R 4/18, H01R 4/02, B23K 1/00, H01R 11/12, H01R 13/03

(54) **JOINT OF COPPER TERMINAL AND ALUMINIUM CONDUCTOR AND PLASMA WELDING METHOD THEREFOR**
VERBINDUNG EINER KUPFERANSCHLUSSKLEMME UND EINES ALUMINIUMLEITERS UND PLASMASCHWEISSVERFAHREN DAFÜR
JOINT DE BORNE EN CUIVRE ET DE CONDUCTEUR EN ALUMINIUM ET SON PROCÉDÉ DE SOUDAGE PLASMA

(30) Priority: 05.06.2017 CN 201710415050
(43) Date of publication of application: 15.04.2020
(73) Proprietor: Jilin Zhong Ying High Technology Co., Ltd., Jilin 130000 (CN)
(72) Inventor: WANG, Chao, Jilin 130000 (CN)
(74) Representative: Epping - Hermann - Fischer
(86) International application number: PCT/CN2018/089209
(87) International publication number: WO 2018/223887

(56) References cited:
- CN-A- 104 201 535
- CN-A- 106 207 499
- CN-A- 107 123 866
- CN-A- 107 342 466
- CN-U- 206 962 034
- DE-B3- 10 346 160
- DE-B3- 102006 010 622
- JP-A- 2012 099 219
- JP-A- H0 982 447
- US-A1- 2006 292 922
- US-A1- 2006 292 922
- US-A1- 2015 287 496

## Description

### FIELD

The present application belongs to the field of wire harness, and relates to a joint of a copper terminal and an aluminum wire and a plasma welding method therefor.

### BACKGROUND

Copper is widely used due to its good electrical conductivity, thermal conductivity and plasticity. However, copper resources are in short supply and the costs of copper are high. Therefore, people began to look for alternatives to copper to reduce costs. Aluminum is relatively cheap, and also has good electrical conductivity, thermal conductivity and plastic processability. Therefore, replacing copper with aluminum is a main trend of the present development, but some performance of aluminum is still not as good as copper, many components still cannot completely replace copper with aluminum, so there are cases where a joint between an aluminum component and a copper component is welded. For example, a conductor made of aluminum is used as a cable, and copper-aluminum contact ends are connected by welding when the cable is connected with a copper terminal of various electrical devices or connected with a copper cable. Generally, the copper terminal in the conventional technology includes a connecting member (or referred to as a connecting end) and a functional member (or referred to as a fixing end) at the back end of the connecting member. The connecting member is configured to connect with the aluminum wire, and the functional member is configured to connect with a terminal of the electrical devices, such as an automobile engine or a battery.

The following are two technical issues that have not been addressed for the connection and conduction of aluminum and copper:
1) Aluminum is an active metal, and a dense oxide film is immediately formed on a surface of the aluminum in dry air, so that the aluminum is not further oxidized and can be water-resistant, while the electrical conductivity of aluminum wire is greatly reduced at the same time.
2) Since copper and aluminum belong to different elements, the metal inertia of copper is stronger than that of aluminum, and there is a relatively large electrode potential difference between copper and aluminum, an electrochemical reaction is prone to occur after copper and aluminum are connected and energized, resulting in gradual oxidization of the aluminum wire and reducing the mechanical strength and the electrical conductivity of the aluminum wire.

In the common connection technology of the wire harness at present, the copper terminal and the conductor are mainly crimped together, that is, a conductive core of the conductor is placed into the connecting member of the terminal, and then the terminal and the conductor are mechanically crimped together by a terminal crimping die. However, for the combination of the copper terminal and the aluminum wire, the conventional crimping method cannot solve the electrochemical reaction between the aluminum wire and the copper terminal over time, and cannot solve the problem of deterioration of the mechanical performance and electrical performance of the joint of the copper terminal and the aluminum wire.

Therefore, a new and low-cost method for connecting the copper terminal and the aluminum wire is urgently needed.

US2006292922A1 discloses method for joining a connecting element, which is made of copper or a copper alloy, for a cable, particularly a cable lug, to an electric cable provided with a conductor that is made of aluminium. The connecting element, which is provided with a nickel coating on the surfaces thereof facing away from the aluminium conductor, is welded to the aluminium conductor by way of zinc.

JP2012099219A discloses a joint of a copper terminal and an aluminium wire, on which the preamble of claim 1 is based, with an aluminum wire in which a substrate plated layer, a copper plated layer and a surface plated layer are formed on the surface of an aluminum metal wire in this order from an inner side, as a conductor, and the substrate plated layer comprises a metal with the order of ionization tendency between aluminum and copper while the surface plater layer comprises Sn or Sn-based alloy. A formation method for a connection terminal structure in an aluminum electrical wire comprises a step of caulking and fixing a terminal portion in a wire bundle of the aluminum wire composing the aluminum electrical wire by a caulking member, a step of making a tip of a thread solder get close to the end surface in the terminal portion of the wire bundle, and a step of soldering by heating the tip by the plasma arc method so that the end surface or the end surface and the neighborhood are coated by a solder material of the thread solder.

DE10346160B3 discloses that a method involves pushing a metal, internally tinned contact terminal, especially made of copper or copper alloy, over an end surface of a stripped end of the cable. The terminal is tinned with metal on the end with the individual conductors at the end of the cable by ultrasonic tinning via an opening. An independent claim is also included for a connection device for contacting a cable with wires or braids of aluminum or aluminum alloy.

JPH0982447A discloses that a core of a wire harness is exposed by stripping the insulative covering at the foremost part of an insulated electric wire to constitute the harness. A band-shaped brazing material is inserted between the core and the connection part of a terminal, and these parts and are pinched by pressure in the electrode of a resistance welding machine followed by current feeding, and now the band- shaped brazing material will quickly be melted by the resistance heating to establish strong connection of the core with the terminal through the brazing material.

### SUMMARY

In order to overcome the problems in the conventional technology that the copper-aluminum connection is prone to electrochemical corrosion, aluminum is easily oxidized and the strength of the joint decreases over time, a joint of a copper terminal and an aluminum wire and a manufacturing method thereof are provided according to the present application. The joint and the manufacturing method thereof can avoid the electrochemical corrosion between copper and aluminum, can improve the mechanical performance and electrical performance of the copper-aluminum j oint, and can increase the service life of the copper-aluminum joint.

The above object of the present application is achieved by the following technical solutions:
According to the present application, a joint of a copper terminal and an aluminum wire and a manufacturing method thereof are provided according to the present application as set out in the appended claims. The copper terminal has a connecting member and a functional member connected with the connecting member, a conductive core of the aluminum wire is connected with the connecting member of the copper terminal, wherein at least the conductive core of the aluminum wire is connected with the connecting member of the copper terminal through a transition welding layer. The joint of the copper terminal and the aluminum wire has a crimping region. An area of the crimping region accounts for at least 1% of an overlapping area of the aluminum wire and the copper terminal. The joint of the copper terminal and the aluminum wire further comprises a reinforcing welding layer, the reinforcing welding layer wraps an end surface of the conductive core of the aluminum wire. The transition welding layer and the reinforcing welding layer are composed of the same solder, which is melted by plasma arc welding and filled to the connection gap between the cooper terminal and the aluminum wire by capillary action, and the solder is inserted into the whole crimping region. The depth of penetration of the solder accounts for 5% to 100% of a length of the whole crimping region. The metal material of the solder is a metal or alloy having a melting point not higher than a melting point of aluminum, and the thickness of the reinforcing welding layer is 1.5mm to 5.5mm.

Specifically, the transition welding layer is formed by filling the melted solder into a connection gap between the connecting member of the copper terminal and the aluminum wire after the solder is melted. A depth of penetration of the solder accounts for 3% to 100% of a length of the connecting member of the copper terminal. In an embodiment, the depth of penetration of the solder accounts for 30% to 100% of the length of the connecting member of the copper terminal.

In an embodiment, the crimping region of the joint of the copper terminal and the aluminum wire accounts for at least 10% of the overlapping area of the aluminum wire and the copper terminal. The transition welding layer is composed of solder. The transition welding layer is formed by filling the melted solder into the connection gap between the copper terminal and the aluminum wire after the solder is melted. In an embodiment, the depth of penetration of the solder accounts for 35% to 100% of the length of the whole crimping region.

In the joint and welding method of the present application, the metal material of the solder is a metal or alloy having a melting point not higher than that of aluminum. In a preferred embodiment, the metal material of the solder contains zinc. Because the melting point of zinc is lower than that of copper and aluminum, the temperature can be controlled to melt zinc, but not to melt the joint of the copper terminal and the aluminum wire when heating and melting the solder during processing, thereby affecting the mechanical performance and electrical performance of the joint. Besides, the zinc is relatively cheap. Preferably, the zinc accounts for more than 30% of a total weight of the solder. More preferably, the zinc accounts for more than 60% of the total weight of the solder.

The joint of the copper terminal and the aluminum wire in the present application insulates the copper terminal from the aluminum wire through the transition welding layer, or through the transition welding layer and the reinforcing welding layer, thereby effectively reducing the electrochemical corrosion of copper and aluminum. Moreover, since the reinforcing welding layer wraps the end surface of the aluminum wire, the copper terminal and the conductive core of the aluminum wire are not exposed to air and moisture, further reducing the corrosion. In addition, the transition welding layer and the reinforcing welding layer firmly secure the joint of the copper terminal and the aluminum wire, which effectively increases a drawing force of the joint.

In the present application, the copper terminal is made of copper or copper alloy. The connecting member of the copper terminal has a hollow column shape with openings at both ends, wherein a side surface of the hollow column may be closed or not closed.

In a preferred embodiment, the connecting member of the copper terminal is integrated with the functional member, wherein the connecting member is a member of the copper terminal for connecting with the aluminum wire, and the functional member is a fixing area of the copper terminal for connecting with an electrical device, and is a main region where the end of the cable is installed and fixed to electrically connect the copper terminal with the electrical device.

In a preferred embodiment, a surface of the copper terminal is applied with a coating. Preferably, the coating has a thickness of 3µm to 5000µm. More preferably, the thickness of the coating is 5µm to 1000µm. The coating can be applied to the copper terminal by means of electroplating, electromagnetic welding, arc spraying or pressure welding.

A metal spacer layer has a thickness of 3µm to 5000µm. In a preferred embodiment, the thickness of the metal spacer layer is between 5µm and 1000µm. If the thickness of the metal spacer layer is less than 3µm, the metal spacer layer is easy to be destroyed by the copper terminal and the aluminum wire during crimping or welding, so that the contact of the copper and the aluminum causes the metal spacer layer to fail to insulate the copper from the aluminum. If the thickness of the metal spacer layer is greater than 5000µm, because the electrical conductivity of most of the metal spacer layers is not as good as that of copper and aluminum, a large thickness of the metal spacer layer causes a voltage drop of the joint of the copper terminal and the aluminum wire to rise, and a consumption amount of the spacer metal is increased and the cost is increased, but the electrical performance and mechanical performance of the joint of the copper terminal and the aluminum wire are not significantly increased. Generally, if the metal spacer layer is applied by electroplating or arc spraying, the thickness of the metal spacer layer can reach 3µm to 1000µm, and if the metal spacer layer is applied by electromagnetic welding or pressure welding, the thickness of the metal spacer layer can reach 1000µm to 5000µm. Therefore, the metal spacer layer in the present application is set in a thickness range of 3µm to 5000µm.

The metal material of the coating is one or any combination of metals of chromium or chromium alloy, zinc or zinc alloy, tin or tin alloy, titanium or titanium alloy, zirconium or zirconium alloy, nickel or nickel alloy, silver or silver alloy, and gold or gold alloy. More preferably, the metal material of the coating is one or any combination of metals of zinc or zinc alloy, tin or tin alloy, and nickel or nickel alloy.

In the joint and the welding method in the present application, the related conductive core of the aluminum wire may be aluminum or aluminum alloy. The aluminum wire is a solid conductor or a multi-strand wire.

On the other hand, a plasma welding method for the joint of the copper terminal and the aluminum wire is further disclosed according to the present application, which includes the following steps 1 to 3:
In step 1, the conductive core of the aluminum wire is assembled to the connecting member of the copper terminal.
In step 2, the conductive core of the aluminum wire and the connecting member of the copper terminal are pressed tight by means of crimping to form the crimping region.
In step 3, the solder is conveyed to the copper terminal. According to the invention, the solder is conveyed to the connecting member of the copper terminal. According to the invention, the solder is conveyed to the crimping region of the aluminum wire and the copper terminal, and then the solder is melted by plasma arc welding and filled to the connection gap between the copper terminal and the aluminum wire by capillary action to form the transition welding layer.

In another embodiment, the solder may be pre-filled and then connected, the specific welding method includes the following steps 1 to 3:
In step 1, the conductive core of the aluminum wire is wrapped by the solder, or at least a portion where the connecting member of the copper terminal is connected with the conductive core of the aluminum wire is wrapped by the solder, and then the conductive core of the aluminum wire is assembled to the connecting member of the copper terminal.
In step 2, the conductive core of the aluminum wire, the solder and the connecting member of the copper terminal are pressed tight by means of crimping to form the crimping region.
In step 3, the solder is melted between the copper terminal and the aluminum wire by plasma arc welding and is filled to the gap between the copper terminal and the aluminum wire by capillary action to form the transition welding layer.

In step 3), the solder is first melted by plasma arc welding to form the reinforcing welding layer, and then the welding process is continued to fill the solder to the gap between the copper terminal and the aluminum wire to form the transition welding layer. The reinforcing welding layer has a thickness of 1.5mm to 5.5mm.
In step 2, the area of the crimping region of the joint of the copper terminal and the aluminum wire accounts for at least 1% of the overlapping area of the aluminum wire and the copper terminal.
In step 3, after the joint of the copper terminal and the aluminum wire is welded by plasma welding, the depth of penetration of the solder accounts for 3% to 100% of the length of the connecting member of the copper terminal. Experiments show that the more the depth of penetration accounts for the length of the whole connecting member, the better the mechanical performance and electrical performance of the connecting member are. If the depth of penetration accounts for less than 3% of the length of the connecting member, the mechanical performance and electrical performance of the connecting member are significantly decreased.
Experiments show that the more the depth of penetration accounts for the whole crimping region, the better the mechanical performance and electrical performance of the connecting member are. If the depth of penetration accounts for less than 5% of the whole crimping region, the mechanical performance and electrical performance of the connecting member are significantly decreased.
In step 3, the material of the solder is a metal or an alloy with a melting point not higher than that of aluminum.

The present application applies the plasma arc welding with the solder to a manufacture of the joint of the copper terminal and the aluminum wire for the first time. At present, the joint of the copper terminal and the aluminum wire is mainly made by crimping, that is, the connection between the copper terminal and the aluminum wire is realized by mechanical crimping. In the field of wire bunch production, no one uses the plasma arc welding to make the joint of the copper terminal and the aluminum wire.

First of all, it is difficult to ensure the welding strength and stability of the joint of the copper terminal and the aluminum wire only by plasma arc welding, and the requirements of the wire bunch for the mechanical strength and use stability of the joint of the copper terminal and the aluminum wire are unable to meet. If only the copper terminal is in contact with and welded with the aluminum wire, because the melting points of aluminum and copper respectively are 660 °C and 1083 °C, the aluminum and the copper cannot be melted synchronously during welding, there are brittle metal compounds such as copper-rich metals in the welding seams, and the welding quality is very poor, which cannot meet the electrical and mechanical requirements of the wire bunch field for the use of the joint of the copper terminal and the aluminum wire.

The present application applies the solder and plasma arc welding to the connection of the copper terminal and the aluminum wire, thereby ensuring the mechanical performance and electrical performance of the joint of the copper terminal and the aluminum wire. More importantly, the solder is melted at the connection gap between the aluminum wire and the copper terminal to form the transition welding layer; or, the solder is melted to first form the reinforcing welding layer, and then the welding process is continued to fill the solder to the gap between the copper terminal and the aluminum wire to form the transition welding layer.

The transition welding layer insulates the conductive core of the aluminum wire from the copper terminal, and mostly insulates the joint of the copper terminal and the aluminum wire from the external air and water, thereby effectively avoiding the electrochemical corrosion caused by the direct contact between the copper terminal and the conductive core of the aluminum wire, reducing the potential difference between the copper and the aluminum through the transition welding layer, improving the service life of the joint of the copper terminal and the aluminum wire, and ensuring the mechanical performance and long-term electrical performance of the joint of the copper terminal and the aluminum wire. The reinforcing welding layer in the present application can further improve the mechanical performance of the joint of the copper terminal and the aluminum wire, can completely insulate the conductive core of the aluminum wire from the external air and water, and can further prolong the service life of the joint of the copper terminal and the aluminum wire.

In addition, the stability, heat generation and temperature of the plasma arc welding are higher than those of general arc welding. Compared with the general arc welding, the plasma arc welding has a greater penetration force and a greater welding speed. The welding time of the plasma arc welding is shortened by at least 20% of the welding time of the general arc welding, and the power consumption is reduced by at least 30% or more, which significantly reduces the manufacturing cost of the joint of the copper terminal and the aluminum wire.

It should be pointed out that the mechanical performance and electrical performance of the copper-aluminum connection terminal can be enhanced by crimping the copper terminal and the aluminum wire together before welding the copper terminal and the aluminum wire with the solder by the plasma arc welding. The joint use of the plasma arc welding and the solder can improve the mechanical performance and electrical performance to a certain extent, however, the improvement of performance is limited, since the solder is only distributed on the surface of the conductor by capillary action after melting and forms a connection with the copper terminal. In a preferred embodiment, the copper terminal is mechanically crimped with the aluminum wire and then the plasma arc welding is performed, which not only enhances the mechanical performance but also ensures the electrical performance by using the solder to reduce the potential difference between copper and aluminum. It is not obvious that the solder and the crimping jointly enhance the mechanical performance and electrical performance of the joint of the copper terminal and aluminum wire after the plasma arc welding. In particular, if the solder contains more than 60% zinc, by combining the plasma arc welding with crimping, the maximum voltage drop of the joint of the copper terminal and the aluminum wire is reduced by about 15%, and the maximum of the drawing force is increased by about 20%.

The following are the advantages of the present application:
1. The plasma arc welding combined with the solder to form the transition welding layer is applied to the manufacture of the joint of the copper terminal and aluminum wire for the first time, which enhances the mechanical performance and electrical performance of the joint of the copper terminal and the aluminum wire, effectively avoids the electrochemical corrosion caused by the direct contact between the copper terminal and the conductive core of the aluminum wire, reduces the potential difference between copper and aluminum through the transition welding layer, and prolongs the service life of the joint of the copper terminal and the aluminum wire.
2. The reinforcing welding layer in the present application can further improve the mechanical performance of the joint of the copper terminal and the aluminum wire, can completely insulate the conductive core of the aluminum wire from the external air and water, and can further prolong the service life of the joint of the copper terminal and the aluminum wire.
3. During welding the joint of the copper terminal and the aluminum wire by the plasma arc welding, the melted solder, the heated copper terminal and aluminum wire are all under protection of the inert gas of the plasma arc welding, which prevents the aluminum wire from further oxidation caused by oxygen in the air and ensures the electrical performance and the service life of the joint of the copper terminal and the aluminum wire after welding.
4. The mechanical performance and electrical performance of the copper-aluminum connection terminal can be enhanced by crimping the copper terminal and the aluminum wire together before welding the copper terminal and the aluminum wire with the solder by the plasma arc welding. The maximum voltage drop of the joint of the copper terminal and the aluminum wire is reduced by about 15%, and the maximum increase of the drawing force is increased by about 20%.
5. The stability, heat generation and temperature of the plasma arc welding are higher than those of general arc welding. Compared with the general arc welding, the plasma arc welding has a greater penetration force and a greater welding speed. The welding time of the plasma arc welding is shortened by at least 20% of the welding time of the general arc welding, and the power consumption is reduced by at least 30% or more, which significantly reduces the manufacturing cost of the joint of the copper terminal and the aluminum wire. Besides, the plasma arc welding process is stable, thereby effectively ensuring the quality of the joint of the copper terminal and the aluminum wire.
6. A joint of the copper terminal and the aluminum wire in the conventional technology requires the connecting member of the copper terminal to be arc-shaped or a hollow column with openings at both ends, while the present application is suitable for producing various shapes of joints of the copper terminal and the aluminum wire, which effectively solves the limitation of producing the joint of the copper terminal and the aluminum wire by means of crimping and the like in the shape selection of the copper terminal.

### BRIEF DESCRIPTION OF THE DRAWINGS

Figure 1 illustrates an exemplary pattern of a copper terminal;
Figure 2 illustrates an exemplary pattern of an aluminum wire;
Figure 3 illustrates an exemplary pattern of the aluminum wire connecting with the copper terminal;
Figure 4 illustrates an exemplary pattern of a top view of the copper terminal and the aluminum wire after the connection is completed;
Figure 5 illustrates an exemplary pattern of a longitudinal section of the copper terminal and a multicore aluminum wire after the welding is completed;
Figure 6 illustrates an exemplary pattern of a longitudinal section of the copper terminal and a solid aluminum wire after the welding is completed;
Figure 7 illustrates an exemplary pattern of a cross section of the copper terminal and the aluminum wire after the welding is completed;
Figure 8 illustrates a bucket-shaped copper terminal applicable in the present application;
Figure 9 illustrates an exemplary pattern of the copper terminal in Figure 8 after the copper terminal is welded according to the method of the present application; and
Figure 10 illustrates an exemplary pattern of a side view of a flat copper terminal and the aluminum wire after the connection is completed.

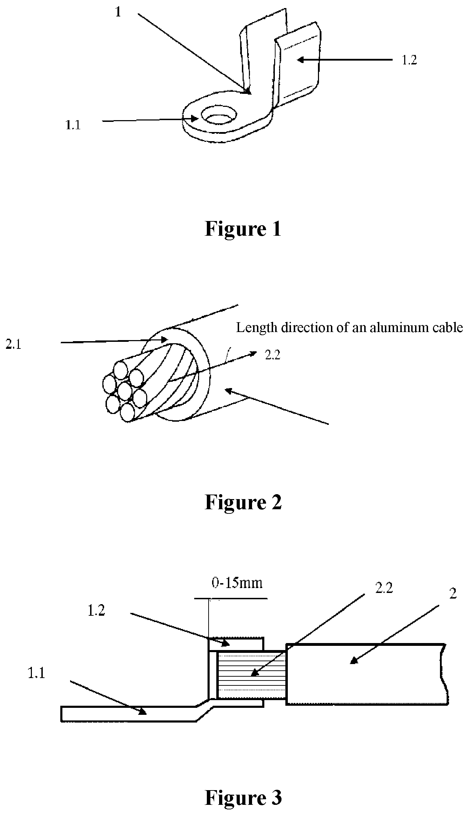

Reference numerals in Figures 1 to 10 are listed as follows:

| | | | |
|---|---|---|---|
| 1 | copper terminal; | 1.1 | functional member; |
| 1.2 | connecting member; | 2 | aluminum wire; |
| 2.1 | insulation layer; | 2.2 | aluminum core conductor; |
| 3 | transition welding layer; | 4 | reinforcing welding layer; |
| 5 | terminal coating. | | |

### DETAILED DESCRIPTION OF EMBODIMENTS

The technical solutions of the present application are further illustrated by specific embodiments. The specific embodiments are not intended to limit the scope of protection of the present application. Some non-essential modifications and adaptations made by others according to the concept of the present application still fall within the scope of protection of the present application. Embodiments of the invention are defined by the appended set of claims. In the following, parts of the description and drawings referring to embodiments which are not covered by the claims are not presented as embodiments of the invention, but as examples useful for understanding the invention.

### First embodiment: a joint of a copper terminal and an aluminum wire

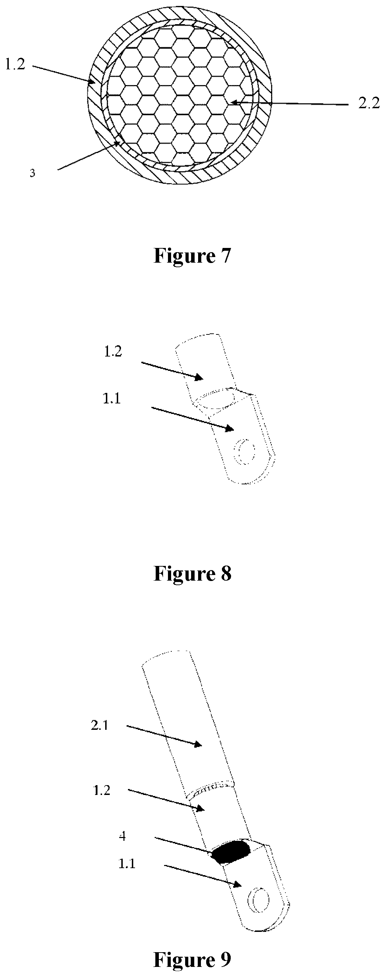

As shown in Figures 1 and 8, the copper terminal 1 includes a connecting member 1.2 and a functional member 1.1 at a rear end thereof.

As shown in Figure 2, the aluminum wire 2 is a multi-strand wire, which includes an aluminum core conductor 2.2 and an insulation layer 2.1.

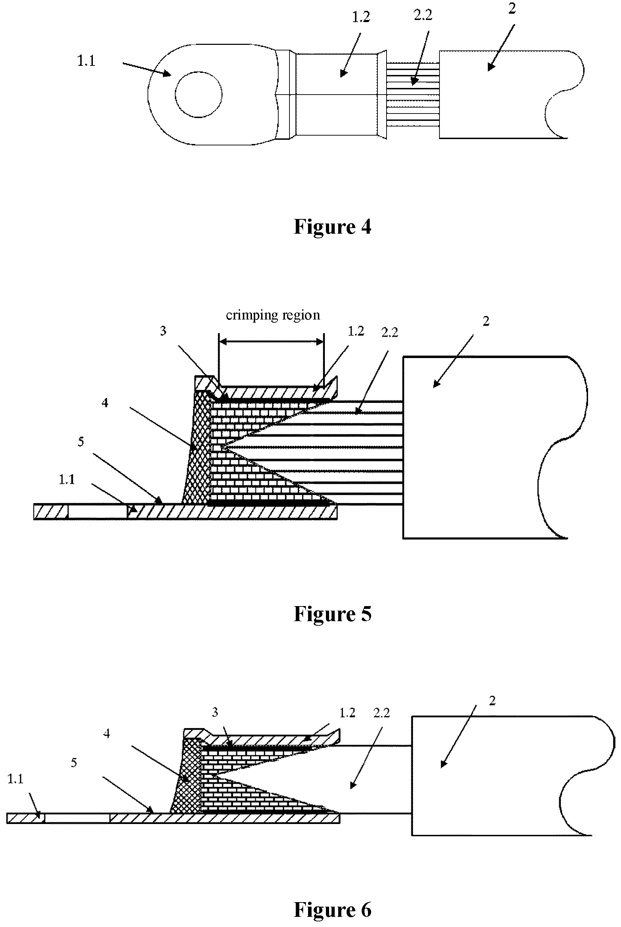

The conductive core of the aluminum wire 2 is connected with the connecting member 1.2. Specifically, a longitudinal sectional view of the joint is shown in Figure 5. A transition welding layer 3 is provided in a gap between a front end of the aluminum wire and the connecting member. A reinforcing welding layer 4 is further provided at the front end of the aluminum wire. The reinforcing welding layer 4 completely wraps an end face of the front end of the aluminum wire and is integrated with the transition welding layer.

As shown in Figure 3, the reinforcing welding layer has a thickness of 0mm to 15mm, and preferably, the thickness of the reinforcing welding layer is 1.5mm to 5.5mm.

As shown in Figure 5, a crimping region is provided between the copper terminal and the conductive core of the aluminum wire, and an area of the crimping region accounts for at least 1% of an overlapping area between the aluminum wire and the copper terminal. Preferably, the area of the crimping region of the joint of the copper terminal and the aluminum wire accounts for at least 10% of the overlapping area between the aluminum wire and the copper terminal.

### Second embodiment: a joint of a copper terminal and an aluminum wire

Compared with the first embodiment, the present embodiment has the following difference: the joint does not have a reinforcing welding layer, therefore it does not fall under the scope of the claims.

### Third embodiment: a joint of a copper terminal and an aluminum

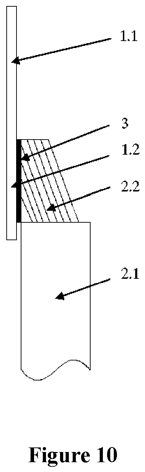

Compared with the first embodiment, the present embodiment has the following difference: as shown in Figure 10, the connecting member of the copper terminal is flat, the aluminum wire is pre-pressed onto the copper terminal by a tool or a die, the solder is melted between the copper terminal and the aluminum wire by the plasma arc welding and is filled to the gap between the copper terminal and the aluminum wire by capillary action to form the transition welding layer.

### Fourth embodiment: a joint of a copper terminal and an aluminum

Compared with the first embodiment, the present embodiment has the following difference:
As shown in Figure 5, a surface of the copper terminal further includes a coating 5.

Preferably, the coating has a thickness of 3µm to 5000µm, and more preferably, the thickness of the coating is 5µm to 1000µm.

Preferably, the coating is applied to the copper terminal by means of electroplating, electromagnetic welding, arc spraying or pressure welding.

Electroplating process includes the following steps: step 1, providing a plated metal at an anode; step 2, providing a substance to be plated at a cathode; step 3, connecting the cathode and the anode with an electrolyte solution containing metal positive ions to be plated; step 4, oxidizing (losing electrons) the metal of the anode, reducing (obtaining electrons) the positive ions in the solution at the cathode into atoms and accumulating the atoms on a surface layer of the cathode, after the cathode and the anode are energized by a direct current power supply.

Electromagnetic welding process includes the following steps: step 1, stacking two kinds of metals to be pressure-welded; step 2, forming a high voltage magnetic in the welding area through electromagnetic welding equipment, enabling the two kinds of metals to collide at an atomic energy level driven by an electromagnetic force, thereby welding the two kinds of metals together.

Arc spraying process includes: conveying the spacer metal to an arc area and atomizing the spacer metal, and then spraying the atomized spacer metal onto a surface of a workpiece at a high speed under the action of the compressed gas to form an arc spraying coating.

Pressure welding process includes the following steps: step 1, stacking two kinds of metals to be pressure-welded; step 2, applying pressure to fully diffuse surfaces to be welded to realize interatomic bonding; step 3, improving the welding effect and shortening the welding time by increasing the temperature, according to the metal and the pressure source.

Preferably, the metal material of the coating is one or any combination of metals of chromium or chromium alloy, zinc or zinc alloy, tin or tin alloy, titanium or titanium alloy, zirconium or zirconium alloy, nickel or nickel alloy, silver or silver alloy, and gold or gold alloy. More preferably, the metal material of the coating is one or any combination of metals of zinc or zinc alloy, tin or tin alloy, and nickel or nickel alloy.

### Fifth embodiment: a joint of a copper terminal and an aluminum

Compared with the first embodiment, as shown in Figure 6, the present embodiment has the following difference: the aluminum wire is a solid conductor.

### Sixth embodiment: a plasma welding method for a copper terminal and an aluminum wire

As shown in Figure 1, the copper terminal 1 of the present application has the functional member 1.1 and the connecting member 1.2 connected to the functional member. In the present embodiment, the connecting member is wing-shaped, and an end face of the connecting member has a U-shaped structure.

As shown in Figure 2, the aluminum wire 2 of the present application has a multicore aluminum wire 2.2 and an outer insulation layer 2.1. Part of the insulation layer is peeled off according to the size of the copper terminal before crimping.

The following are the steps for preparing the joint of the copper terminal and the aluminum wire:
As shown in Figure 3, the insulation layer of the aluminum wire is peeled off, then the aluminum wire is placed in the wing-shaped connecting member of the copper terminal, and then the aluminum wire and the wing-shaped connecting member of the copper terminal are crimped by a crimping die, wherein the area of the crimping region accounts for at least 1% of the overlapping area between the aluminum wire and the copper terminal. Preferably, the area of the crimping region of the joint of the copper terminal and the aluminum wire accounts for at least 10% of the overlapping area between the aluminum wire and the copper terminal.

After crimping, the compression ratio of the conductive core of the aluminum wire is between 70% and 90%. Preferably, the compression ratio of the conductive core of the aluminum wire is between 75% and 85% to ensure the mechanical performance and electrical conductivity of the joint of the copper terminal and the aluminum wire, and the joint of the copper terminal and the aluminum wire after crimping is shown in Figure 4.

Specifically, the solder is conveyed to the copper terminal. According to the invention, the solder is conveyed to the connecting member of the copper terminal. According to the invention, the solder is conveyed to the crimping region of the aluminum wire and the copper terminal, and then the solder is melted by plasma arc welding and filled to the connection gap between the copper terminal and the aluminum wire by capillary action to form the transition welding layer.

The ionized and protective gas of the plasma welding may be nitrogen, argon, helium, neon, krypton or xenon, and more preferably argon; a flow rate of the ionized gas is 1 to 5 liters/minute, and a flow rate of the protective gas is 3 to 12 liters/minute. Preferably, the flow rate of the ionized gas is 2 to 3 liters/minute, and the flow rate of the protective gas is 5 to 10 liters/minute; in the welding process, an angle between a plasma soldering gun and an axial direction of the copper terminal is less than 45 degrees, and more preferably less than 20 degrees; and a welding current of the plasma welding is between 5A and 100A, and more preferably between 20A and 80A.

In the welding process, the welding temperature at a center area can reach 400 Celsius to 550 Celsius, so that the solder is melted to form the reinforcing welding layer 4 first, and then as the welding process continues, the solder is filled to the gap between the copper terminal and the aluminum wire to form the transition welding layer 3. The longitudinal section view of a final state of the joint of the copper terminal and the aluminum wire is shown in Figure 5. The depth of penetration of the solder accounts for 3% to 100% of the length of the connecting member of the copper terminal. More preferably, the depth of penetration of the solder accounts for 30% to 100% of the length of the connecting member of the copper terminal; and preferably, the depth of penetration of the solder accounts for 5% to 100% of the length of the whole crimping region, and more preferably, the depth of penetration of the solder accounts for 35% to 100% of the length of the whole crimping region.

The metal material of the solder is a metal or alloy having a melting point not higher than that of aluminum, so that the conductive core of the aluminum wire is not melted during welding, and the solder can infiltrate into the gap between the conductive core of the aluminum wire and the copper terminal by capillary action, to form, according to the invention, the reinforcing welding layer first, and then form the transition welding layer.

Figure 7 shows a cross section view of the crimping region of the connecting member of the copper terminal and the aluminum wire, wherein the solder is tightly fused between the connecting member of the copper terminal and the aluminum wire, which insulates the conductive core of the aluminum wire from the corrosion of air and water, effectively avoids the electrochemical corrosion of the joint of the copper terminal and the aluminum wire caused by air and water, and well conducts conductivity with copper and aluminum, thereby ensuring the mechanical performance, electrical performance, and service life of the joint of the copper terminal and the aluminum wire.

### Seventh embodiment: a plasma welding method for a copper terminal and an aluminum wire

Compared with the sixth embodiment, the present embodiment which does not form part of the invention as claimed, has the following difference:
the connecting member of the copper terminal is flat and arc-shaped, and when welding, the solder is first conveyed to the copper terminal. Preferably, the solder is conveyed to the connecting member of the copper terminal. Preferably, the solder is conveyed to the crimping region of the aluminum wire and the copper terminal, and then the solder is melted by plasma arc welding and filled to the connection gap between the copper terminal and the aluminum wire by capillary action, to form the transition welding layer. The melted solder is only filled into the connection gap between the connecting member of the copper terminal and the aluminum wire, so as to form the transition welding layer, but not to form the reinforcing welding layer.

### Eighth embodiment: a plasma welding method for a copper terminal and an aluminum wire

Compared with the sixth embodiment, the present embodiment has the following difference:
1. After the insulation layer of the aluminum wire is peeled off, the conductive core of the aluminum wire without the insulation layer is wrapped by a solid thin layer of solder, and then is placed into the connecting member of the copper terminal for crimping.
2. The connecting member of the copper terminal has a hollow column structure with openings at both ends, and a side surface of the connecting member is closed or unclosed.

### Ninth embodiment: a method for connecting a copper terminal and an aluminum wire

Compared with the sixth embodiment, the present embodiment has the following difference:
After the insulation layer of the aluminum wire is peeled off, at least a portion where the connecting member of the copper terminal is connected with the conductive core of the aluminum wire is wrapped by the solid thin layer of solder, and then the conductive core of the aluminum wire is placed into the connecting member of the copper terminal for crimping.

### Tenth embodiment: effects of different connection methods on a voltage drop and drawing force of a joint of a copper terminal and an aluminum wire

Copper terminals and aluminum wires of a same specification and structure are used to prepare joints of copper terminals and aluminum wires in the following five methods. Ten samples are prepared for each method, that is, a total of 50 samples.

### First method: crimping

The aluminum wire is directly crimped into the copper terminal by a die.

### Second method: plasma arc welding

The copper terminal is directly welded together with the aluminum wire by plasma arc welding. A welding current of the plasma arc welding is 40A, a flow rate of the ionized gas argon is 2.5 liters/minute, a flow rate of the protective gas argon is 7.5 liters/minute, and an angle between a plasma soldering gun and an axial direction of the copper terminal is 15 degrees.

### Third welding method: crimping plus plasma arc welding

Referring to the sixth embodiment, the aluminum wire is crimped into the copper terminal by a die, and then the copper terminal is welded with the aluminum wire by plasma arc welding. After crimping, a compression ratio of the aluminum wire is 80%. A welding current of the plasma arc welding is 40A. A flow rate of the ionized gas argon is 2.5 liters/minute, a flow rate of the protective gas argon is 7.5 liters/minute, and an angle between a plasma soldering gun and an axial direction of the copper terminal is 15 degrees.

### Fourth welding method: plasma arc welding plus solder

The solder is conveyed to the connecting member of the copper terminal, and the copper terminal is welded with the aluminum wire by plasma arc welding. A welding current of the plasma arc welding is 40A.

The solder contains 90% zinc and 10% aluminum, a flow rate of the ionized gas argon is 2.5 liters/minute, a flow rate of the protective gas argon is 7.5 liters/minute, and an angle between a plasma soldering gun and an axial direction of the copper terminal is 15 degrees.

### Fifth welding method: crimping plus plasma arc welding plus solder

The aluminum wire is crimped into the connecting member of the copper terminal by a die. The solder is conveyed to the connecting member of the copper terminal, and the copper terminal is welded with the aluminum wire by plasma arc welding. A welding current of the plasma arc welding is 40A. The solder contains 90% zinc and 10% aluminum. After crimping, a compression ratio of the aluminum wire is 80%. A flow rate of the ionized gas argon is 2.5 liters/minute, a flow rate of the protective gas argon is 7.5 liters/minute, and an angle between a plasma soldering gun and an axial direction of the copper terminal is 15 degrees.

After the joints of the copper terminals and the aluminum wires are prepared in the above five methods, the voltage drop and drawing force of the 50 samples in 5 groups are tested in a same test method, and test parameters of each group of samples are averaged. The test results are shown in Table 1.

**Table 1 A comparison of voltage drops and drawing forces of the joints of the copper terminals and aluminum wires prepared in five different preparing methods**

| **Welding method** | | **Voltage drop(mV)** | **Drawing force (N)** |
|---|---|---|---|
| **First method** | Crimping | 6. 65 | 1687. 3 |
| **Second method** | Plasma are welding | 5. 39 | 1745. 5 |
| **Third method** | Crimping plus plasma arc welding | 5. 13 | 3058. 1 |
| **Fourth method** | Plasma are welding plus solder | 3. 32 | 3072.5 |
| **Fifth method** | Crimping plus plasma arc welding plus solder | 3. 01 | 3356.5 |

It can be seen from Table 1 that for the joints of the copper terminals and the aluminum wires prepared only by crimping or only by plasma arc welding (the first method and the second method), the drawing force of the joint is small and the voltage drop is large, which cannot meet the requirements of the mechanical performance and electrical performance that the joint of the copper terminal and the aluminum wire should reach in use. Although the drawing force of the joint of the copper terminal and the aluminum wire can be improved by using the third method, the voltage drop thereof is still large, which still cannot meet the requirements of the electrical performance that the joint of the copper terminal and the aluminum wire should reach in use. The joints of the copper terminals and the aluminum wires prepared by the fourth method and the fifth method of the present application meet the requirements of the mechanical performance and electrical performance that the joint of the copper terminal and the aluminum wire should reach in use. It is obvious that the mechanical performance and electrical performance of the joint prepared by the "crimping plus plasma arc welding plus solder" preparing method of the joint of the copper terminal and the aluminum wire of the present application are the best among the above five methods.

### Eleventh embodiment: effects of solders with different zinc-base ratios on performance of the joint of the copper terminal and the aluminum wire

The welding method refers to the sixth embodiment. With the variable control method, the welding current is 40A, the flow rate of the ionized argon is 3 liters/minute, the flow rate of the protective argon is 8 liters/minute, the compression ratio of the aluminum wire is 80%, and the angle between the soldering gun of the plasma welding and the axial direction of the copper terminal is 15 degrees. The solders are at different zinc-base ratios, and the joints are prepared by the manufacturing method of the joint of the copper terminal and the aluminum wire of the third embodiment. The drawing force and voltage drop of the prepared joints are tested according to the same test method, 100 samples are prepared for each zinc-base ratio, and test parameters are averaged. The test results are shown in Table 2.

**Table 2 Effects of solders with different zinc-base ratios on performance of the joint**

| **NO.** | **Metal material of solder** | | **Voltage drop**(mV) | **Drawing force**(N) |
|---|---|---|---|---|
| 1 | 100%Zn | | 2.72 | 3238.3 |
| 2 | 90%Zn | 10%Al | 2.81 | 3236.7 |
| 3 | 80%Zn | 20%Al | 2.95 | 3229.5 |
| 4 | 70%Zn | 30%Al | 3.08 | 3224.6 |
| 5 | 60%Zn | 40%Al | 3.59 | 3012.7 |
| 6 | 50%Zn | 50%Al | 3.68 | 2956.3 |
| 7 | 40%Zn | 60%Al | 3.79 | 2875.3 |
| 8 | 30%Zn | 70%Al | 3.91 | 2765.1 |
| 9 | 20%Zn | 80%Al | 4.78 | 2497.6 |
| 10 | 10%Zn | 90%Al | 5.75 | 2401.2 |

It can be seen from Table 2, the higher the weight ratio of zinc, the lower the voltage drop of the copper terminal and the aluminum wire, that is, the better the electrical performance of the joint of the copper terminal and the aluminum wire.

When a joint of a copper terminal and an aluminum wire is made of a solder having a zinc-base ratio of 30% or more of the total weight of the solder, the drawing force performance of the joint can meet the requirements of the use mechanical performance of most of the joint of the copper terminal and the aluminum wire. When a joint of a copper terminal and an aluminum wire is made of a solder having a zinc-base ratio of 60% or more of the total weight of the solder, the drawing force performance of the joint can fully meet the requirements of the use mechanical performance of the joint of the copper terminal and the aluminum wire.

### Twelfth embodiment: effect of compression ratio of the conductive core of the aluminum wire on the performance of the joint of the copper terminal and the aluminum wire

In order to test the effects of different compression ratios of the conductive core of the aluminum wire on the performance of the joint of the copper terminal and the aluminum wire, the variable control method is used in the present embodiment. Different joints as shown in Table 3 are prepared by using the manufacturing method of the joint of the copper terminal and the aluminum wire of the sixth embodiment. The welding current is 40A, the flow rate of the ionized argon is 3 liters/minute, the flow rate of the protective argon is 8 liters/minute, the solder contains 90% zinc and 10% aluminum, and the angle between the plasma soldering gun and the axial direction of the copper terminal is 15 degrees. 10 samples of the joint are obtained by each method, and test parameters are averaged. The compression ratios and test results are shown in Table 3.

**Table 3 Effects of different compression ratios of the conductive core of the aluminum wire on the performance of the joint of the copper terminal and the aluminum wire**

| **NO.** | **Compression ratio of the aluminum wire** | **Voltage drop** (mV) | **Drawing force**(N) |
|---|---|---|---|
| 1 | 65% | 3.96 | 2059.1 |
| 2 | 70% | 3.56 | 2638.4 |
| 3 | 75% | 3.27 | 2997.5 |
| 4 | 80% | 3.05 | 3261.2 |
| 5 | 85% | 3.19 | 2918.7 |
| 6 | 90% | 3.51 | 2575.4 |
| 7 | 95% | 4.36 | 2095.3 |

According to the test results in this table, if the compression ratio of the conductive core of the aluminum wire is between 70% and 90% after crimping, the electrical performance and mechanical performance of the joint of the copper terminal and the aluminum wire are better. More preferably, if the compression ratio of the conductive core of the aluminum wire is between 75% and 85% after crimping, the electrical performance and mechanical performance of the joint of the copper terminal and the aluminum wire are more prominent.

### Thirteenth embodiment: effects of different thicknesses of the reinforcing welding layer on the drawing force and the voltage drop of the joint of the copper terminal and the aluminum wire

In order to prove the effects of different thicknesses of the reinforcing welding layer on the performance of the joint of the copper terminal and the aluminum wire, 17 groups of samples with different thicknesses of the reinforcing welding layer are prepared, and each group includes 10 samples. The average values of the test results of each thickness of the reinforcing welding layer are filled in the table 4, after the drawing force and voltage drop of the joint of the copper terminal and the aluminum wire are tested.

The welding method refers to the sixth embodiment. The solder contains 90% zinc and 10% aluminum, the flow rate of the ionized gas argon is 2.5 liters/minute, the flow rate of the protective gas argon is 7.5 liters/minute, and the angle between the plasma soldering gun and the axial direction of the copper terminal is 15 degrees.

It can be seen from the data in Table 4 that the performance of the drawing force and voltage drop of the joint of the copper terminal and the aluminum wire begins to decrease significantly, if the thickness of the reinforcing welding layer of the joint of the copper terminal and the aluminum wire exceeds 15mm. Therefore, the thickness of the reinforcing welding layer is preferred to be 0mm to 15mm, and the performance of the drawing force and voltage drop of the joint of the copper terminal and the aluminum wire is better, if the thickness of the reinforcing welding layer is 1.5mm to 5.5mm,

**Table 4 Effects of different thicknesses of the reinforcing welding layer on the performance of the joint of the copper terminal and the aluminum wire**

| **NO.** | **Thickness of the reinforcing welding layer (mm)** | **Drawing force (N)** | **Voltage drop (mV)** |
|---|---|---|---|
| 1 | 0 | 3220.8 | 2.95 |
| 2 | 1 | 3217.4 | 3.01 |
| 3 | 1.5 | 3224.5 | 3.12 |
| 4 | 2 | 3229.8 | 3.28 |
| 5 | 2.5 | 3249.7 | 3.41 |
| 6 | 3 | 3256.4 | 3.52 |
| 7 | 3.5 | 3187.8 | 3.67 |
| 8 | 4 | 3126.6 | 3.72 |
| 9 | 5.5 | 3062.4 | 3.76 |
| 10 | 6 | 3028.7 | 3.82 |
| 11 | 8 | 3016.5 | 3.94 |
| 12 | 10 | 2897.6 | 4.05 |
| 13 | 12 | 2901.4 | 4.18 |
| 14 | 14 | 2745.6 | 4.22 |
| 15 | 15 | 2726.4 | 4.31 |
| 16 | 16 | 2672.5 | 4.58 |
| 17 | 17 | 2591.3 | 4.67 |

### Fourteenth embodiment: effects of different depths of penetration of the solder on the performance of the joint of the copper terminal and the aluminum wire

In order to verify the effect of the depth of penetration on the drawing force and voltage drop of the joint of the copper terminal and the aluminum wire, 44 groups of welding samples with different depths of penetration are prepared, and each group includes 10 samples.

The welding method refers to the sixth embodiment. The solder contains 90% zinc and 10% aluminum, the flow rate of the ionized gas argon is 2.5 liters/minute, the flow rate of the protective gas argon is 7.5 liters/minute, and the angle between the plasma soldering gun and the axial direction of the copper terminal is 15 degrees.

It can be seen from Table 5 that the greater the ratio of the depth of penetration to the length of the connecting member or the length of the crimping region, the better the mechanical performance and electrical performance of the joint of the copper terminal and aluminum wire. However, the mechanical performance and electrical performance of the joint of the copper terminal and the aluminum wire are decreased significantly, if the welding depth accounts for less than 5% of the length of the crimping region, or if the welding depth accounts for less than 3% of the length of the connecting member. The mechanical performance and electrical performance of joint of the copper terminal and the aluminum wire are better, if the depth of penetration of the solder accounts for 35% to 100% of the crimping region of the joint of the copper terminal and the aluminum wire, or if the depth of penetration of the solder accounts for 30% to 100% of the length of the connecting member.

**Table 5 Effects of different depths of penetration of the solder on the drawing force and voltage drop of the joint of the copper terminal and the aluminum wire**

| **NO.** | **Ratio of depth of penetration to the length of the crimping region** | **Drawing force (N)** | **Voltage drop (mV)** | **Ratio of depth of penetration to the length of the connecting member** | **Drawing force (N)** | **Voltage drop (mV)** |
|---|---|---|---|---|---|---|
| 1 | 100% | 3354. 1 | 3.18 | 100% | 3249. 8 | 3.52 |
| 2 | 95% | 3327. 5 | 3. 24 | 95% | 3217. 4 | 3.64 |
| 3 | 90% | 3304. 3 | 3. 37 | 90% | 3194.2 | 3.72 |
| 4 | 85% | 2994. 8 | 3. 49 | 85% | 3146.8 | 3. 89 |
| 5 | 80% | 2973. 4 | 3. 52 | 80% | 3021. 6 | 3. 97 |
| 6 | 75% | 2956. 7 | 3.66 | 75% | 2992.4 | 4.05 |
| 7 | 70% | 2934. 9 | 3. 71 | 70% | 2988. 3 | 4.11 |
| 8 | 65% | 2907. 5 | 3.88 | 65% | 2971. 4 | 4.16 |
| 9 | 60% | 2892.4 | 3. 94 | 60% | 2916. 7 | 4.21 |
| 10 | 55% | 2878.4 | 4. 08 | 55% | 2901. 3 | 4.28 |
| 11 | 50% | 2864. 2 | 4. 16 | 50% | 2882.9 | 4.29 |
| 12 | 45% | 2849. 4 | 4.24 | 45% | 2773. 4 | 4. 35 |
| 13 | 40% | 2834. 7 | 4. 39 | 40% | 2749. 6 | 4.42 |
| 14 | 35% | 2829. 4 | 4. 52 | 35% | 2728. 7 | 4. 59 |
| 15 | 30% | 2811.7 | 4. 66 | 30% | 2699. 5 | 4.71 |
| 16 | 25% | 2786. 9 | 4.71 | 25% | 2671. 8 | 4.86 |
| 17 | 20% | 2763. 8 | 4.79 | 20% | 2618.4 | 4. 98 |
| 18 | 15% | 2751. 6 | 4.82 | 15% | 2586.4 | 5. 18 |
| 19 | 10% | 2737. 4 | 4. 94 | 10% | 2574. 2 | 5.29 |
| 20 | 5% | 2681. 2 | 5. 27 | 5% | 2541. 8 | 5.47 |
| 21 | 3% | 2513. 7 | 6.08 | 3% | 2519. 4 | 6.48 |
| 22 | 1% | 2428. 1 | 6. 49 | 1% | 2498. 2 | 6. 74 |

### Fifteenth embodiment: effects of different areas of the crimping region on the performance of the joint of the copper terminal and the aluminum wire

In order to verify the effect of the area of the crimping region of the joint of the copper terminal and the aluminum wire on the drawing force and voltage drop of the joint, 12 groups of welding samples with different areas of the crimping region are prepared, and each group includes 10 samples.

The welding method refers to the sixth embodiment. The solder contains 80% zinc and 20% aluminum, the flow rate of the ionized gas argon is 2.5 liters/minute, and the flow rate of the protective gas argon is 7.5 liters/minute, and the angle between the plasma soldering gun and the axial direction of the copper terminal is 20 degrees.

**Table 6 Effects of different ratios of the area of the crimping region to the overlapping area of the aluminum wire and the copper terminal on the drawing force and voltage drop of the joint of the copper terminal and the aluminum wire**

| **NO.** | **Ratio of the area of the crimping region to the overlapping area of the aluminum wire and the copper terminal** | **Voltage drop (mV)** | **Drawing force (N)** |
|---|---|---|---|
| 1 | 100% | 2.71 | 3157.2 |
| 2 | 90% | 2.61 | 3211.8 |
| 3 | 80% | 2.75 | 3194.7 |
| 4 | 70% | 2.84 | 3027.6 |
| 5 | 60% | 2.92 | 2974.4 |
| 6 | 50% | 3.01 | 2964.3 |
| 7 | 40% | 3.11 | 2945.8 |
| 8 | 30% | 3.28 | 2918.4 |
| 9 | 20% | 3.41 | 2846.7 |
| 10 | 10% | 3.88 | 2819.8 |
| 11 | 1% | 4.21 | 2726.4 |
| 12 | <1% | 5.07 | 2434.8 |

It can be seen from the Table 6 that the greater the ratio of the area of the crimping region of the joint of the copper terminal and the aluminum wire to the overlapping area of the aluminum wire and the copper terminal, the better the mechanical performance and electrical performance of the connecting member. However, the mechanical performance and electrical performance of the connecting member are significantly decreased, if the ratio of the area of the crimping region to the overlapping area of the aluminum wire and the copper terminal is less than 1%. Therefore, it is preferred that the area of the crimping region accounts for at least 1% of the overlapping area of the aluminum wire and the copper terminal, and preferably, the area of the crimping region of the joint of the copper terminal and the aluminum wire accounts for at least 10% of the overlapping area of the aluminum wire and the copper terminal.

## Claims

1. A joint of a copper terminal (1) and an aluminum wire (2), wherein the copper terminal (1) comprises a connecting member and a functional member connected with the connecting member of the copper terminal (1), a conductive core of the aluminum wire (2) is connected with the connecting member of the copper terminal (1), wherein at least the conductive core of the aluminum wire (2) is connected with the connecting member of the copper terminal (1) through a transition welding layer (3),
wherein the joint of the copper terminal (1) and the aluminum wire (2) comprises a crimping region, an area of the crimping region accounts for at least 1% of an overlapping area of the aluminum wire (2) and the copper terminal (1),
wherein the joint of the copper terminal (1) and the aluminum wire (2) further comprises a reinforcing welding layer (4); the reinforcing welding layer (4) wraps an end surface of the conductive core of the aluminum wire (2),
wherein the transition welding layer (3) and the reinforcing welding layer (4) are composed of the same solder which is melted by plasma arc welding and filled to the connection gap between the cooper terminal and the aluminum wire by capillary action, and the solder is inserted into the whole crimping region, a depth of penetration of the solder accounts for 5% to 100% of the length of the whole crimping region,
wherein the metal material of the solder is a metal or alloy having a melting point not higher than a melting point of aluminum,
**characterized in that**,
the thickness of the reinforcing welding layer (4) is 1.5mm to 5.5mm.

2. The joint of a copper terminal (1) and an aluminum wire (2) according to claim 1, wherein the area of the crimping region of the joint of the copper terminal (1) and the aluminum wire (2) accounts for at least 10% of the overlapping area of the aluminum wire (2) and the copper terminal (1).

3. The joint of a copper terminal (1) and an aluminum wire (2) according to claim 1, wherein a depth of penetration of the solder accounts for 3% to 100% of a length of the connecting member of the copper terminal (1).

4. The joint of a copper terminal (1) and an aluminum wire (2) according to claim 2, wherein the depth of penetration of the solder accounts for 35% to 100% of the length of the whole crimping region.

5. The joint of a copper terminal (1) and an aluminum wire (2) according to claim 3 or 4, wherein the metal material of the solder contains zinc; more preferably, the zinc accounts for more than 30% of a total weight of the solder; and more preferably, the zinc accounts for more than 60% of the total weight of the solder.

6. The joint of a copper terminal (1) and an aluminum wire (2) according to claim 1, wherein the copper terminal (1) is made of copper or copper alloy.

7. The joint of a copper terminal (1) and an aluminum wire (2) according to claim 1, wherein a surface of the copper terminal (1) is further applied with a coating;
preferably, the coating has a thickness of 3µm to 5000µm; more preferably, the thickness of the coating is 5µm to 1000µm;
preferably, the coating is applied to the copper terminal (1) by means of electroplating, electromagnetic welding, arc spraying or pressure welding; and
preferably, a metal material of the coating is one or any combination of metals of chromium or chromium alloy, zinc or zinc alloy, tin or tin alloy, titanium or titanium alloy, zirconium or zirconium alloy, nickel or nickel alloy, silver or silver alloy, and gold or gold alloy; and more preferably, the metal material of the coating is one or any combination of metals of zinc or zinc alloy, tin or tin alloy, and nickel or nickel alloy.

8. The joint of a copper terminal (1) and an aluminum wire (2) according to claim 1, wherein a material of the conductive core of the aluminum wire (2) is aluminum or aluminum alloy; and preferably, the aluminum wire (2) is a solid conductor or a multi-strand wire.

9. A plasma welding method for preparing the joint of a copper terminal (1) and an aluminum wire (2) according to any one of claims 1 to 8, comprising:
step 1), wrapping the conductive core of the aluminum wire (2) by the solder, or wrapping at least a portion where the connecting member of the copper terminal (1) is connected with the conductive core of the aluminum wire (2) by the solder, and then assembling the conductive core of the aluminum wire (2) to the connecting member of the copper terminal (1);
step 2), pressing the conductive core of the aluminum wire (2), the solder and the connecting member of the copper terminal (1) tight by means of crimping to form the crimping region; and
step 3), melting the solder between the copper terminal (1) and the aluminum wire (2) by the plasma arc welding, and filling the solder to the gap between the copper terminal (1) and the aluminum wire (2) by the capillary action to form the transition welding layer (3). wherein, in step 3), the solder is first melted by the plasma arc welding to form the reinforcing welding layer (4), and then the welding process is continued to fill the solder to the gap between the copper terminal (1) and the aluminum wire (2) to form the transition welding layer (3); the thickness of the reinforcing welding layer (4) is 1.5mm to 5.5mm,
wherein, in step 2), the area of the crimping region of the joint of the copper terminal (1) and the aluminum wire (2) accounts for at least 1% of the overlapping area of the aluminum wire (2) and the copper terminal (1);
in step 3), the depth of penetration of the solder accounts for for 5% to 100% of the length of the whole crimping region, after the joint of the copper terminal (1) and the aluminum wire (2) is plasma welded; and
in step 3), the metal material of the solder is a metal or an alloy having a melting point not higher than that of aluminum.

10. The joint of a copper terminal (1) and an aluminum wire (2) according to claim 1, wherein the depth of penetration of the solder accounts for 30% to 100% of the length of the connecting member of the copper terminal (1).

## Patentansprüche

1. Verbindung zwischen einem Kupferanschluss (1) und einem Aluminiumdraht (2), wobei der Kupferanschluss (1) ein Verbindungselement und ein mit dem Verbindungselement des Kupferanschlusses (1) verbundenes Funktionselement umfasst, ein leitfähiger Kern des Aluminiumdrahts (2) mit dem Verbindungselement des Kupferanschlusses (1) verbunden ist, wobei zumindest der leitfähige Kern des Aluminiumdrahts (2) über eine Übergangsschweißschicht (3) mit dem Verbindungselement des Kupferanschlusses (1) verbunden ist,
wobei die Verbindung zwischen dem des Kupferanschluss (1) und dem Aluminiumdraht (2) einen Crimpbereich umfasst, wobei eine Fläche des Crimpbereichs mindestens 1 % einer Überlappungsfläche des Aluminiumdrahts (2) und des Kupferanschlusses (1) ausmacht,
wobei die Verbindung zwischen dem des Kupferanschluss (1) und dem Aluminiumdraht (2) ferner eine verstärkende Schweißschicht (4) umfasst; die verstärkende Schweißschicht (4) eine Endfläche des leitfähigen Kerns des Aluminiumdrahts (2) umhüllt,
wobei die Übergangsschweißschicht (3) und die verstärkende Schweißschicht (4) aus demselben Lot bestehen, das durch Plasmaschweißen geschmolzen und durch Kapillarwirkung in den Verbindungsspalt zwischen dem Kupferanschluss und dem Aluminiumdraht gefüllt wird, und das Lot in den gesamten Crimpbereich eingebracht wird, die Eindringtiefe des Lötmittels beträgt 5 % bis 100 % der Länge des gesamten Crimpbereichs,
wobei das Metallmaterial des Lötmittels ein Metall oder eine Legierung mit einem Schmelzpunkt ist, der nicht höher ist als der Schmelzpunkt von Aluminium,
**dadurch gekennzeichnet, dass**
die Dicke der verstärkenden Schweißschicht (4) 1,5 mm bis 5,5 mm beträgt.

2. Verbindung zwischen einem Kupferanschluss (1) und einem Aluminiumdraht (2) nach Anspruch 1, wobei die Fläche des Crimpbereichs der Verbindung zwischen dem Kupferanschluss (1) und dem Aluminiumdraht (2) mindestens 10 % der Überlappungsfläche des Aluminiumdrahts (2) und des Kupferanschlusses (1) ausmacht.

3. Verbindung zwischen einem Kupferanschluss (1) und einem Aluminiumdraht (2) nach Anspruch 1, wobei die Eindringtiefe des Lötmittels 3 % bis 100 % der Länge des Verbindungselements des Kupferanschlusses (1) ausmacht.

4. Verbindung zwischen einem Kupferanschluss (1) und einem Aluminiumdraht (2) nach Anspruch 2, wobei die Eindringtiefe des Lötmittels 35 % bis 100 % der Länge des gesamten Crimpbereichs ausmacht.

5. Verbindung zwischen einem Kupferanschluss (1) und einem Aluminiumdraht (2) gemäß Anspruch 3 oder 4, wobei das Metallmaterial des Lötmittels Zink enthält; vorzugsweise macht das Zink mehr als 30 % des Gesamtgewichts des Lötmittels aus; und noch bevorzugter macht das Zink mehr als 60 % des Gesamtgewichts des Lötmittels aus.

6. Verbindung zwischen einem Kupferanschluss (1) und einem Aluminiumdraht (2) gemäß Anspruch 1, wobei der Kupferanschluss (1) aus Kupfer oder einer Kupferlegierung besteht.

7. Verbindung zwischen einem Kupferanschluss (1) und einem Aluminiumdraht (2) gemäß Anspruch 1, wobei auf eine Oberfläche des Kupferanschlusses (1) zusätzlich eine Beschichtung aufgebracht ist;
vorzugsweise weist die Beschichtung eine Dicke von 3 µm bis 5000 µm auf; noch bevorzugter beträgt die Dicke der Beschichtung 5 µm bis 1000 µm;
vorzugsweise wird die Beschichtung mittels Galvanisierung, elektromagnetischem Schweißen, Lichtbogenspritzen oder Druckschweißen auf den Kupferanschluss (1) aufgebracht; und
vorzugsweise ist das Metallmaterial der Beschichtung ein Metall oder eine beliebige Kombination von Metallen aus Chrom oder einer Chromlegierung, Zink oder einer Zinklegierung, Zinn oder einer Zinnlegierung, Titan oder einer Titanlegierung, Zirkonium oder einer Zirkoniumlegierung, Nickel oder einer Nickellegierung, Silber oder einer Silberlegierung sowie Gold oder einer Goldlegierung; und vorzugsweise besteht das Metallmaterial der Beschichtung aus einem oder einer beliebigen Kombination der Metalle Zink oder einer Zinklegierung, Zinn oder einer Zinnlegierung sowie Nickel oder einer Nickellegierung.

8. Verbindung zwischen einem Kupferanschluss (1) und einem Aluminiumdraht (2) gemäß Anspruch 1, wobei ein Material des leitfähigen Kerns des Aluminiumdrahtes (2) Aluminium oder eine Aluminiumlegierung ist; und vorzugsweise ist der Aluminiumdraht (2) ein Massivleiter oder ein mehradriger Draht.

9. Plasmaschweißverfahren zur Herstellung der Verbindung zwischen einem Kupferanschluss (1) und einem Aluminiumdraht (2) gemäß einem der Ansprüche 1 bis 8, umfassend:
Schritt 1), Umwickeln des leitfähigen Kerns des Aluminiumdrahts (2) mit dem Lot oder Umwickeln zumindest eines Abschnitts, an dem das Verbindungselement des Kupferanschlusses (1) mit dem leitfähigen Kern des Aluminiumdrahts (2) verbunden ist, mit dem Lot, und anschließendes Zusammenfügen des leitfähigen Kerns des Aluminiumdrahts (2) mit dem Verbindungselement des Kupferanschlusses (1);
Schritt 2), festes Zusammendrücken des leitfähigen Kerns des Aluminiumdrahts (2), des Lötmittels und des Verbindungselements des Kupferanschlusses (1) mittels Crimpen, um den Crimpbereich zu bilden; und
Schritt 3), Schmelzen des Lötmittels zwischen dem Kupferanschluss (1) und dem Aluminiumdraht (2) durch Plasmaschweißen und Füllen des Lötmittels in den Spalt zwischen dem Kupferanschluss (1) und dem Aluminiumdraht (2) durch Kapillarwirkung, um die Übergangsschweißschicht (3) zu bilden. wobei in Schritt 3) das Lot zunächst durch Plasmaschweißen geschmolzen wird, um die Verstärkungsschweißschicht (4) zu bilden, und anschließend der Schweißvorgang fortgesetzt wird, um das Lot in den Spalt zwischen dem Kupferanschluss (1) und dem Aluminiumdraht (2) zu füllen und so die Übergangsschweißschicht (3) zu bilden; die Dicke der verstärkenden Schweißschicht (4) beträgt 1,5 mm bis 5,5 mm,
wobei in Schritt 2) die Fläche des Crimpbereichs der Verbindung zwischen dem Kupferanschluss (1) und dem Aluminiumdraht (2) mindestens 1 % der Überlappungsfläche des Aluminiumdrahts (2) und des Kupferanschlusses (1) ausmacht;
in Schritt 3) beträgt die Eindringtiefe des Lötmittels 5 % bis 100 % der Länge des gesamten Crimpbereichs, nachdem die Verbindung zwischen dem Kupferanschluss (1) und dem Aluminiumdraht (2) plasmageschweißt wurde; und
in Schritt 3) ist das Metallmaterial des Lötmittels ein Metall oder eine Legierung mit einem Schmelzpunkt, der nicht höher ist als der von Aluminium.

10. Verbindung zwischen einem Kupferanschluss (1) und einem Aluminiumdraht (2) nach Anspruch 1, wobei die Eindringtiefe des Lötmittels 30 % bis 100 % der Länge des Verbindungselements der Kupferklemme (1) ausmacht.

## Revendications

1. Joint entre une borne en cuivre (1) et un fil d'aluminium (2), la borne en cuivre (1) comportant un élément de connexion et un élément fonctionnel relié à l'élément de connexion de la borne en cuivre (1), un noyau conducteur du fil d'aluminium (2) étant relié à l'élément de connexion de la borne en cuivre (1), au moins le noyau conducteur du fil d'aluminium (2) étant relié à l'élément de connexion de la borne en cuivre (1) par une couche de soudage de transition (3),
le joint entre la borne en cuivre (1) et le fil d'aluminium (2) comportant une zone de sertissage et une surface de la zone de sertissage représentant au moins 1 % d'une surface de chevauchement du fil d'aluminium (2) et de la borne en cuivre (1),
le joint entre la borne en cuivre (1) et le fil d'aluminium (2) comportant en outre une couche de soudage de renforcement (4) ; la couche de soudage de renforcement (4) enveloppant une face frontale du noyau conducteur du fil d'aluminium (2),
la couche de soudage de transition (3) et la couche de soudage de renforcement (4) étant constituées de la même brasure, qui est fondue par soudage à l'arc plasma et qui remplit par capillarité l'interstice de joint entre la borne en cuivre et le fil d'aluminium, et la brasure étant introduite dans toute la zone de sertissage, la profondeur de pénétration de la brasure représentant de 5 % à 100 % de la longueur totale de la zone de sertissage,
le matériau métallique de la brasure étant un métal ou un alliage dont le point de fusion n'est pas supérieur à celui de l'aluminium,
**caractérisé en ce que**
l'épaisseur de la couche de soudage de renforcement (4) est comprise entre 1,5 mm et 5,5 mm.

2. Le joint entre une borne en cuivre (1) et un fil d'aluminium (2) selon la revendication 1, sachant que la surface de la zone de sertissage du joint entre la borne en cuivre (1) et le fil d'aluminium (2) représente au moins 10 % de la surface de chevauchement du fil d'aluminium (2) et de la borne en cuivre (1).

3. Le joint entre une borne en cuivre (1) et un fil d'aluminium (2) selon la revendication 1, sachant que la profondeur de pénétration de la brasure représente entre 3 % et 100 % de la longueur de l'élément de connexion de la borne en cuivre (1).

4. Le joint entre une borne en cuivre (1) et un fil d'aluminium (2) selon la revendication 2, sachant que la profondeur de pénétration de la brasure représente 35 % à 100 % de la longueur totale de la zone de sertissage.

5. Le joint entre une borne en cuivre (1) et un fil d'aluminium (2) selon la revendication 3 ou 4, sachant que le matériau métallique de la brasure contient du zinc ; le zinc représentant de préférence plus de 30 % du poids total de la brasure ; et, de manière encore plus préférée, le zinc représentant plus de 60 % du poids total de la brasure.

6. Le joint entre une borne en cuivre (1) et un fil d'aluminium (2) selon la revendication 1, sachant que la borne en cuivre (1) est fabriquée en cuivre ou en un alliage de cuivre.

7. Le joint entre une borne en cuivre (1) et un fil d'aluminium (2) selon la revendication 1, sachant qu'un revêtement est en outre appliqué sur une surface de la borne en cuivre (1) ;
de préférence, le revêtement ayant une épaisseur comprise entre 3 µm et 5 000 µm ; de manière encore plus préférée, l'épaisseur du revêtement étant comprise entre 5 µm et 1000 µm ;
de préférence, le revêtement étant appliqué sur la borne en cuivre (1) par galvanisation, soudage électromagnétique, projection à l'arc ou soudage sous pression ; et
de préférence, le matériau métallique du revêtement étant un métal/alliage ou une combinaison quelconque de métaux parmi le chrome ou un alliage de chrome, le zinc ou un alliage de zinc, l'étain ou un alliage d'étain, le titane ou un alliage de titane, le zirconium ou un alliage de zirconium, le nickel ou un alliage de nickel, l'argent ou un alliage d'argent, et l'or ou un alliage d'or ; et de manière encore plus préférée, le matériau métallique du revêtement étant un métal/alliage ou une combinaison quelconque de métaux parmi le zinc ou un alliage de zinc, l'étain ou un alliage d'étain, et le nickel ou un alliage de nickel.

8. Le joint entre une borne en cuivre (1) et un fil d'aluminium (2) selon la revendication 1, sachant que le matériau du noyau conducteur du fil d'aluminium (2) est de l'aluminium ou un alliage d'aluminium ; et de préférence, sachant que le fil d'aluminium (2) est un conducteur massif ou un fil multiconducteur.

9. Procédé de soudage au plasma pour la fabrication d'un joint entre une borne en cuivre (1) et un fil d'aluminium (2) selon l'une des revendications 1 à 8, comprenant :
étape 1), l'enrobage du noyau conducteur du fil d'aluminium (2) avec la brasure, ou l'enrobage d'au moins une partie dans laquelle l'élément de connexion de la borne en cuivre (1) est relié au noyau conducteur du fil d'aluminium (2), avec la brasure, puis l'assemblage du noyau conducteur du fil d'aluminium (2) avec l'élément de connexion de la borne en cuivre (1) ;
étape 2), le pressage du noyau conducteur du fil d'aluminium (2), la brasure et l'élément de connexion de la borne en cuivre (1) par sertissage afin de former la zone de sertissage ; et
étape 3), la fusion de la brasure entre la borne en cuivre (1) et le fil d'aluminium (2) par soudage à l'arc plasma, et la pénétration de la brasure dans l'interstice entre la borne en cuivre (1) et le fil d'aluminium (2) par capillarité afin de former la couche de soudage de transition (3), sachant que, à l'étape 3), la brasure est d'abord fondue par soudage à l'arc plasma pour former la couche de soudage de renforcement (4), puis le processus de soudage se poursuit pour introduire la brasure dans l'interstice entre la borne en cuivre (1) et le fil d'aluminium (2) afin de former la couche de soudage de transition (3) ; l'épaisseur de la couche de soudage de renforcement (4) est comprise entre 1,5 mm et 5,5 mm,
sachant que, à l'étape 2), la surface de la zone de sertissage du joint entre la borne en cuivre (1) et le fil d'aluminium (2) représente au moins 1 % de la surface de chevauchement du fil d'aluminium (2) et de la borne en cuivre (1) ;
sachant que, à l'étape 3), la profondeur de pénétration de la brasure représente de 5 % à 100 % de la longueur totale de la zone de sertissage, après que le joint entre la borne en cuivre (1) et le fil d'aluminium (2) a été soudé au plasma ; et
sachant que, à l'étape 3), le matériau métallique de la brasure est un métal ou un alliage dont le point de fusion n'est pas supérieur à celui de l'aluminium.

10. Le joint entre une borne en cuivre (1) et un fil d'aluminium (2) selon la revendication 1, sachant que la profondeur de pénétration de la brasure représente 30 % à 100 % de la longueur de l'élément de connexion de la borne en cuivre (1).
